# EUROPEAN PATENT APPLICATION

(11) **EP 4 465 310 A1**
(43) Date of publication of application: **20.11.2024**
(21) Application number: 23315206.5
(22) Date of filing: 17.05.2023
(51) Int. Cl.: H01B 7/36, G01V 3/08, H02G 9/02

(54) **SYSTEM FOR LABELLING AND/OR LOCATING AN UNDERGROUND CABLE**

(71) Applicant: Nexans, 92400 Courbevoie (FR)
(72) Inventor: Nesbakken, Trond, 2316 Hamar (NO)
(74) Representative: Ipsilon

(57) **Abstract**

A system (1) for labelling and/or locating an underground cable (10), the system (1) comprising a first access box (5) and a second access box (6); and a labelling means (2) comprising an electric conductor (4); wherein a first end of the labelling means (2) is located in the first access box (5), and a second end of the labelling means (2) is located in the second access box (6); and wherein at least a part of the labelling means (2) is configured to be colocalized or is colocalized with the underground cable (10); the use of the system (1) for locating an underground cable, a kit and a method for locating an underground cable (10).

## Description

### Field of the invention

The present invention relates to a method and a system for labelling and/or locating an underground cable.

### Background

Locating underground cables is a crucial task that helps ensure safety, prevent damage, and maintain service continuity. Accidentally damaging underground cables can pose serious safety hazards, cause environmental damage, and result in costly repairs. Knowing the precise location of underground cables can help to avoid such risks and increase efficiency. Compliance with regulations and laws that require locating and marking underground cables before construction or excavation is also important. Proper cable location can facilitate routine maintenance and help identify potential issues before they become significant problems. Accurate knowledge of the location of underground cables is essential for planning future construction or development activities and carrying them out without causing damage to existing infrastructure.

Solutions for locating underground cables already exist.

DE 19725431 relates to a method involving positioning an electric conductor or conductive foil during its installation on the buried pipe, duct or cable. When it is required to locate the buried item an electric signal is fed into the conductor which enables the location of the conductor to be determined using commonly used detection systems. To locate a pipe of non-conductive material, e.g. ceramic, plastic or concrete it can be provided with a conductive coating and/or an integrated conductor to which an electric signal is applied for the purpose of tracking and locating the pipe

The existing solutions require gaining access the power grid stations or connection points, but also to uncouple the cable that needs to be located from the network grid.

This is not desirable because it can pose a safety risk and disrupt the grid's operations. In addition, accessing the power grid station requires obtaining proper authorization and the cooperation of the company owning the power grid station.

Finally, interfering with the grid's operations can cause downtime or interruptions to services that can impact businesses and individuals.

The present invention attempts to solve these challenges, or at least improve on the existing solution.

### Summary of the invention

The present invention is defined by the appended claims and in the following.

In a first aspect, the invention relates to a system for labelling and/or locating an underground cable, the system comprising:
- a first access box and a second access box, the first and second access boxes being preferably located above ground;
- a labelling means comprising an electric conductor;

wherein a first end of the labelling means is located in the first access box, notably connected to the first access box, and a second end of the labelling means is located in the second access box, notably connected to the second access box; and
wherein at least a part of the labelling means is configured to be colocalized or is colocalized with the underground cable.

Here it is to be understood that the first and second ends of the labelling means are located respectively in the first and second access boxes, preferably above ground, and at least a part of the labelling means is configured to be colocalized or is colocalized with the underground cable so that at least a part of the labelling means is located underground and may be used to find the localization of the underground cable.

In an embodiment, the first and second access boxes are connected respectively to the first and second ends of the labelling means and are not connected to the underground cable, notably are not connected to the end terminations of the underground cable.

In an embodiment, the labelling means further comprises an insulating layer surrounding the electric conductor.

Here the term "insulating layer" refers to an electrically insulating layer.

This system allows locating an underground cable and is advantageous, because it allows performing the searching/tracking of the underground cable without accessing the power station and/or electric live parts, through an external interface, here the access boxes. In other words, the system allows performing the searching/tracking of the underground cable without disrupting the grid's operations, by accessing the power station or connection points, or especially by requesting that a cable is disconnected from the grid.

In an embodiment, the labelling means comprises a plurality of insulating layers, the plurality of insulating layers surrounding the electric conductor.

In an embodiment, the labelling means further comprises an electric screen, the electric screen surrounding the insulating layer.

In an embodiment, the labelling means comprises an outer protective sheath, notably made of a polymer material, the outer protective sheath surrounding the insulating layer and/or the electric screen.

In an embodiment, the first and/or second access box may be accessible from above ground.

In an embodiment, the first and/or second access box may be located above ground.

In an embodiment, the first and/or second access box may be separate from the end termination of the cable.

In an embodiment, the first and/or second access box may be configured to send an electrical signal through the electric conductor of the labelling means.

In an embodiment, the first and/or second access box may further comprise a power source for sending an electrical signal through the electric conductor of the labelling means.

In an embodiment, the power source may be located above ground, in the first and/or second access box.

The electrical signal may have a frequency between 500Hz and 200kHz, preferably between 1kHz and 150kHz, and more preferably between 30kHz and 125kHz.

In an embodiment, the first access box and the second access box may be dedicated access boxes, i.e. they may be solely provided for the purpose of sending an electrical signal through the electric conductor.

In an embodiment, the first and/or the second end of the labelling means is electrically grounded.

By grounding at least the first or the second end of the labelling means, the user only needs to connect the power source to the other end of the labelling means (the one that may not be grounded) to detect the position of an underground cable.

In an embodiment, both the first and the second end of the labelling means are electrically grounded.

By grounding the first and the second end of the labelling means, induced voltage is avoided in the labelling means.

In an embodiment, the system may further comprise a detection means, for detecting the electrical signal from a position above ground.

In an embodiment, the detection means may be located above ground.

In an embodiment, the insulating layer may be made of an insulating polymer material.

In an embodiment, the labelling means may comprise a marking to identify the labelling means.

When the labelling means comprises a marking, the system allow for rapid identification of the underground cable, which in turn allows for a rapid localization of the underground cable. A marking is a visible word or symbol, here on the labelling means, in order to give information. This is especially useful when the first or second access box comprises a plurality of labelling means for localizing a plurality of cables.

Typical marking may be printing in and/or etching, engraving, embossing in the labelling means, for example a cable number, a text description, a system number, a barcode, a QR code, etc.

In an embodiment, the labelling means, in particular the insulating layer, may be a continuous elongated flexible ribbon. In other words, the labelling means, in particular the insulating layer, may be an elongated element having a substantially rectangular or oval cross section. This shape is advantageous because it allows a better contact between the cable and the labelling means. In an embodiment, the at least part of the labelling means which is configured to be colocalized or which is colocalized with the underground cable may be in direct contact with the underground cable, notably in direct contact with an outer surface of the underground cable, notably in direct contact with an outer protective sheath of the underground cable.

In an embodiment, the at least part of the labelling means which is configured to be colocalized or which is colocalized with the underground cable may surround helically the underground cable. This arrangement of the labelling means around the underground cable allows for a better colocalization of the labelling means and hence also the underground cable.

In an embodiment, at least a part of the labelling means is adjacent to an outer surface of the underground cable.

In an embodiment, at least a part of the labelling means is embedded in the underground cable. Embedding a part of the labelling means in the underground cable ensures that the labelling means will not be separated from the underground cable during installation of the cable underground.

In a second aspect, the invention relates to a kit comprising:
- a cable that is at least partially underground;
- a system for labelling and/or locating the cable, the system comprising:
   ▪ a first access box and a second access box;
   ▪ a labelling means comprising an electric conductor;

wherein a first end of the labelling means is located in the first access box, and a second end of the labelling means is located in the second access box; and
wherein at least a part of the labelling means is configured to be colocalized or colocalized with the cable.

In an embodiment the cable may be a land cable, preferably a land power cable.

By "land cable that is at least partially underground", we mean a cable that is at least partially buried under the surface of the lithosphere which is not covered by water.

In an embodiment the cable may be a high voltage cable.

High voltage cables are cables adapted to transport currents over 1 kV.

In an embodiment the cable may be a low voltage cable.

Low voltage cables are cables adapted to transport currents of 1kV and under.

In a third aspect, the invention relates to a method for locating an underground cable, notably by using a system according to the first aspect of the invention, the method comprising the steps of:
- accessing, via a first and/or second access box, an end of a labelling means, the labelling means comprising an electric conductor and the labelling means being colocalized with the underground cable;
- connecting a power source to the electric conductor;
- sending an electrical signal from the power source into the electric conductor; and
- detecting the electrical signal, from a position above ground, notably by using the detection means, thereby determining the location of the underground cable.

In a fourth aspect, the invention relates to the use of a system according to the first aspect of the invention for detecting the location of an underground cable.

### Short description of the drawings

In the following description this invention will be further explained by way of exemplary embodiments shown in the drawings:
Fig. 1 shows a perspective view of the labelling means.
Fig. 2a shows a schematic representation of an underground cable and of a system for locating the underground cable known in the art.
Fig. 2b shows a schematic representation of an underground cable and of a first embodiment of the inventive system for locating the underground cable.
Fig. 2c shows a schematic representation of an underground cable and of a second embodiment of the inventive system for locating the underground cable.

### Detailed description

There are known solutions for locating underground cables, for example as described in DE19725431.

DE19725431 discloses a method for determining the position of a cable laid underground, with an additional electrical conductor or conductive layer being arranged externally.

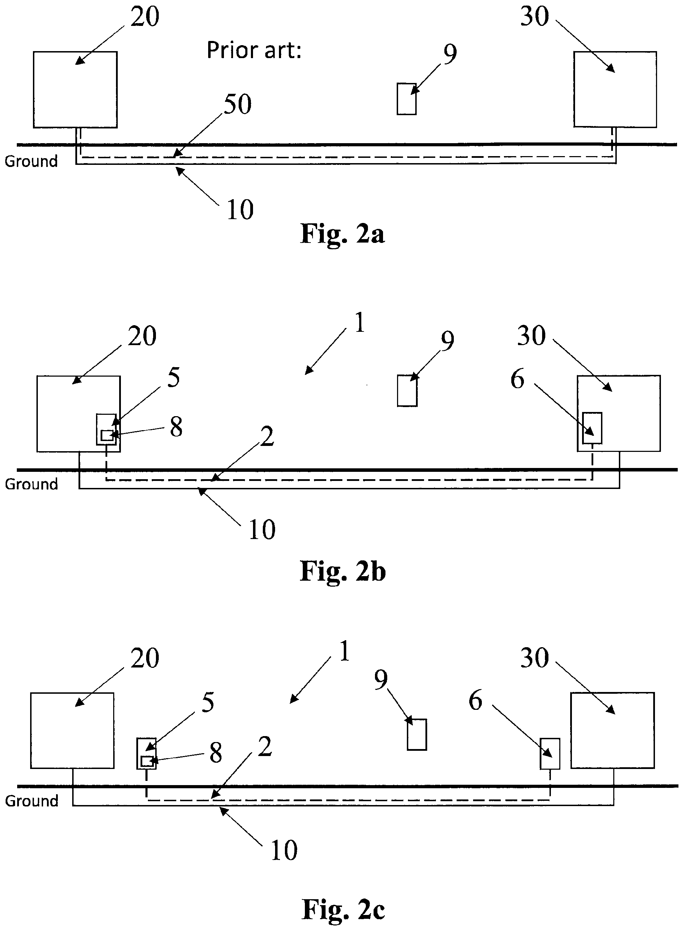

This prior art solution is schematically illustrated in figure 2a. A cable 10 is connected at a first end to a first power grid station or connection point 20, and at a second end to a second power grid station or connection point 30. The cable 10 comprises an additional electrical conductor (or conductive layer) 50 arranged externally, adjacent to the cable 10. The cable 10 and the additional electrical conductor 50 are therefore colocalized and have an underground portion.

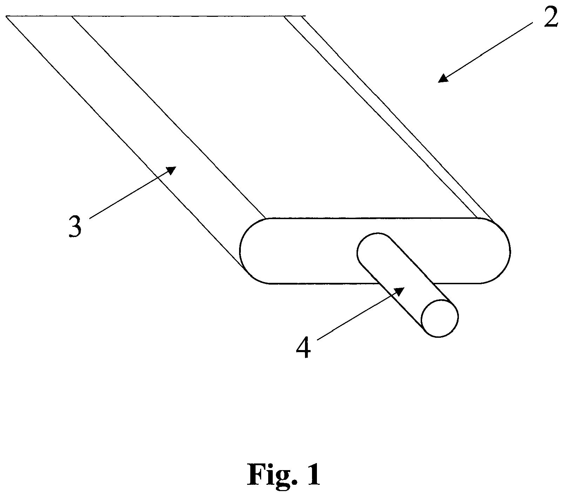

When it is desirable to locate the cable 10 or a portion of the cable 10 that is underground, the cable 10 is disconnected from the power grid stations or connection points 20,30. The electrical conductor 50 is also disconnected and separated from the cable 10 on a sufficient distance (usually a few meters), and then an electrical signal is fed into the electrical conductor 50. The position of the cable 10 is indirectly inferred by means of measurement and detection of the electrical signal through the electrical conductor 50 by a detection means 9. The detection means 9 can be used from a position above ground, as indicated in fig. 1.

It is now referred to fig. 2b, where a first embodiment of the invention is disclosed. Here it is shown the same underground cable 10 connected between the power grid stations 20 and 30. The system 1 here further comprises a first access box 5 within the power grid station 20 and a second access box 6 within the power grid station 30. The first and second access boxes 5,6 are located in the power grid stations 20,30, but in an area not requiring any special qualifications or authorization. In other words, the first and second access boxes 5,6 are located at a safe distance from dangers related to high voltage, so that there is no need to cut power to the high voltage room during operations. This simplifies access to the system 1 for locating the cable 10 underground. As shown in fig. 2b, the labelling means 2 is collocated with the underground cable 10, and the ends of the labelling means are guided up to the respective access boxes 5, 6.

It is now referred to fig. 1, where the labelling means 2 of fig. 2b and fig. 2c is shown. The labelling means 2 comprises an electric conductor 4 surrounded by an insulating layer 3. The labelling means 2 is in the shape of a flexible ribbon. The labelling means 2 is helically wrapped around the underground cable 10 and has a first end located in the first access box 5, and a second end located in the second access box 6.

It is now referred to fig. 2c, where a second embodiment of the invention is disclosed. The system 1 is similar to the system 1 of fig. 2b, the difference being that the first and second access boxes 5,6 are located outside the power grid stations 20,30. Hence, while the system 1 of fig. 2b requires access to at least one of the power grid stations 20, 30 in order to access at least one of the access boxes 5, 6, the system 1 of fig. 2c may be accessed directly from the outside of the power grid stations 20, 30. Hence, the access to the system 1 is further simplified.

During installation of the system 1 of fig. 2b and fig. 2c, the labelling means 2 was grounded at both ends.

In the first and second embodiment, the labelling means comprises a marking to identify the labelling means, here a cable number, engraved the insulating layer. The marking allows the technical personnel to easily identify which cable they are trying to locate.

This system 1 allows locating an underground cable 10 and is advantageous, because it allows performing the searching/tracking of cables without accessing restricted areas of the power grid station or connection point 20,30. Instead, the ends of the labelling means 2 are accessed through an separate interface, here the access boxes 5,6. In other words, the system allows performing the searching/tracking of cables without disrupting the 'grid's operations, by accessing the grid station or by requesting that the cable of interest is disconnected from the network.

Other placement alternatives are available for the labelling means 2. The labelling means 2 may be attached to or placed on or around the cable during or after manufacture. The labelling means 2 may be placed anywhere in or on the cable, for example, but not limited to:
- on top of the outer protective sheath of the cable, along the axis of the cable or helically wound around the cable;
- under the outer protective sheath, along the axis of the cable or helically wound around the cable.

For example, when three cables are twisted together, the labelling means may be twisted together with the cables.

The labelling means 2 may be attached to the cable 10 by using an adhesive, by melting the outer protective sheath of the cable together with the insulating layer 3 of the system 1 for locating an underground cable, by placing the search feature under the outer protective sheath of the cable, etc.

Another advantage of the system 1 is that a plurality of labelling means 2, each collocated with one of a plurality of underground cables 10, may be coupled to the same access box 5,6. This allows for locating a plurality of underground cables 10 at the same time.

### Operation of the system

The operation of the system 1 will now be described in detail.

In a first step, one of the ends of the labelling means 2 is accessed via one of the access boxes 5,6. A power source 8 is connected to the end of the labelling means 2 in order to feed the electrical signal into the electric conductor 4 of the labelling means 2. The other one of the ends of the labelling means 2 may be accessed via the other one of the access boxes 5, 6 and is connected to ground, if not already grounded. The power source 8 is also grounded; thus creating a return path for the current through ground.

The power source 8 may be an independent power source or it may be installed in the first or second access box 5,6. The power source 8 may send an electric current or signal with a frequency detectable by a detection means 9. The power source 8 and detection means 9 may be any traditional equipment already designed to be used for cable detection. An example system of power source 8 and detection means 9 is the Metrotech 530 locator system (transmitter and receiver).

The position of the cable 10 is indirectly inferred by means of measurement and detection of the electrical signal by the detection means 9.

It should be noted that with this system 1, the cable 10 does not need to be disconnected from the power grid stations or connection points 20,30. In the embodiment of fig. 2b, access is required to the power grid stations, but access is not required to high voltage areas within the power grid stations. In the embodiment of fig. 2c, no access is required to the power grid stations.

## Claims

1. A system (1) for labelling and/or locating an underground cable (10), the system (1) comprising:
- a first access box (5) and a second access box (6);
- a labelling means (2) comprising an electric conductor (4);
wherein a first end of the labelling means (2) is located in the first access box (5), and a second end of the labelling means (2) is located in the second access box (6); and
wherein at least a part of the labelling means (2) is configured to be colocalized or is colocalized with the underground cable (10).

2. The system according to claim 1, wherein the labelling means (2) comprises an insulating layer (3) surrounding the electric conductor (4), the insulating layer (3) being preferably made of an insulating polymer material.

3. The system according to claim 1 or 2, wherein the first and/or the second end of the labelling means (2) is electrically grounded.

4. The system according to any one of the preceding claims, wherein the first and/or second access box (5,6) comprises a power source (8) for sending an electrical signal through the electric conductor (4) of the labelling means (2).

5. The system according to claim 4, wherein the system comprises a detection means (9) for detecting the electrical signal from a position above ground.

6. The system according to any one of the preceding claims, wherein the labelling means (2) comprises a marking to identify the labelling means (2).

7. The system according to any one of the preceding claims, wherein the labelling means (2) is a continuous elongated flexible ribbon.

8. The system according to any one of the preceding claims, wherein the at least part of the labelling means (2) which is configured to be colocalized or which is colocalized with the underground cable (10) surrounds helically the underground cable (10).

9. The system according to any one of the preceding claims, wherein the at least part of the labelling means (2) which is configured to be colocalized or which is colocalized with the underground cable (10) is in direct contact with the underground cable (10), notably in direct contact with an outer surface of the underground cable (10), notably in direct contact with an outer protective sheath of the underground cable (10).

10. The system according to any one of the preceding claims, wherein the first and second access boxes (5, 6) are connected respectively to the first and second ends of the labelling means (2) and are not connected to the underground cable (10), notably are not connected to the end terminations of the underground cable (10).

11. A kit comprising:
- a cable (10) that is at least partially underground;
- a system for labelling and/or locating the cable (10), the system comprising:
▪ a first access box (5) and a second access box (6);
▪ a labelling means (2) comprising an electric conductor (4);
wherein a first end of the labelling means (2) is located in the first access box (5), and a second end of the labelling means (2) is located in the second access box (6); and
wherein at least a part of the labelling means (2) is configured to be colocalized or is colocalized with the cable (10).

12. The kit according to claim 11, wherein the cable (10) is a land cable, preferably a land power cable.

13. The kit according to claim 11 or 12, wherein the cable (10) is a high voltage cable.

14. A method for locating an underground cable (10), comprising the steps of:
- accessing, via a first and/or second access box (5,6), an end of a labelling means (2), the labelling means (2) comprising an electric conductor (4) and the labelling means (2) being colocalized with the underground cable (10);
- connecting a power source (8) to the electric conductor (4);
- sending an electrical signal from the power source (8) into the electric conductor (4); and
- detecting the electrical signal, from a position above ground, thereby determining the location of the underground cable (10).

15. Use of a system according to any one of claims 1 to 10 for detecting the position of an underground cable (10).
